# EUROPÄISCHE PATENTSCHRIFT

(11) **EP 1 556 665 B1**
(45) Veröffentlichungstag und Bekanntmachung des Hinweises auf die Patenterteilung: **01.08.2012**
(21) Anmeldenummer: 03775190.6
(22) Anmeldetag: 16.10.2003
(51) Int. Cl.: G01B 7/012

(54) **TASTKOPF MIT MAGNET UND HALLELEMENT FÜR DEN EINSATZ IN EINEM KOORDINATENMESSGERÄT**
SCANNER HEAD COMPRISING A MAGNET AND A HALL ELEMENT FOR USE IN A CO-ORDINATE MEASURING DEVICE
TETE DE SONDE A AIMANT ET ELEMENT A EFFET HALL A UTILISER DANS UN APPAREIL DE MESURE DE COORDONNEES

(30) Priorität: 23.10.2002 DE 10250812
(43) Veröffentlichungstag der Anmeldung: 27.07.2005
(73) Patentinhaber: Carl Zeiss Industrielle Messtechnik GmbH, 73447 Oberkochen (DE)
(72) Erfinder: BRENNER, Kurt, 74589 Satteldorf (DE); JENISCH, Walter, 89520 Heidenheim (DE); STACKLIES, Horst, 73431 Aalen (DE); ROTH, Roland, 73550 Waldstetten (DE)
(74) Vertreter: Duhme, Torsten
(86) Internationale Anmeldenummer: PCT/EP2003/011473
(87) Internationale Veröffentlichungsnummer: WO 2004/038324

(56) Entgegenhaltungen:
- DE-A- 3 708 105
- DE-A- 3 715 698
- DE-A- 19 639 801
- GB-A- 2 238 616
- US-A- 5 326 982

## Beschreibung

Die Erfindung betrifft einen Tastkopf für ein Koordinatenmessgerät mit einem in einem Gehäuse federnd aufgehängten Taststift und mit einer Sensoranordnung zum Erfassen von Auslenkungen des Taststiftes relativ zum Gehäuse, wobei die Sensoranordnung mindestens einen Hallsensor mit einem Magneten und einem in nahem Abstand dazu angeordneten Hallelement aufweist.

Ein Tastkopf der vorstehend genannten Art ist aus der DE 37 21 682 A1 oder aus GB 2 238 616 A bekannt.

Der aus DE 37 21 682 A1 bekannte Tastkopf ist zum Ermitteln von Abmessungen einer Welle vorgesehen. Er weist einen langgestreckten Arm mit einer kugeligen Tastspitze auf, die am Umfang der sich drehenden Welle anliegt. Der Arm ist Teil eines parallelogrammartigen Gebildes, dessen Gelenke durch querschnittsverminderte Abschnitte gebildet werden, die nach Art von Filmscharnieren ausgebildet sind. Die gesamte Anordnung ist einstückig ausgebildet. Um die Bewegung des Armes mit der Tastspitze in ein elektrisch erfassbares Signal umzusetzen, wird eine induktive Sensoranordnung eingesetzt, bei der ein mittelbar von der Tastspitze bewegter Kern in eine Messspule eintaucht. Als alternative Ausführungsform der Sensoranordnung wird dabei auch ein Hallelement vorgeschlagen.

Der bekannte Tastkopf ist ausschließlich dafür vorgesehen und geeignet, eindimensionale Messungen vorzunehmen. Über die Einzelheiten der Anordnung des Hallelementes und die Auswertung der Hallspannung ist nichts angegeben.

Aus der DE 198 23 059 C2 sind ein Verfahren und eine Vorrichtung zum Erfassen der räumlichen Lage eines Körpers bekannt. Bei dieser bekannten Vorrichtung wird ein Raster von 4 x 4 Sensoren eingesetzt, wofür unter anderem Hallsensoren vorgeschlagen werden. Auch hier ist über die Art und Weise der Anordnung der Hallelemente und die Auswertung der Hallspannung nichts weiter ausgesagt.

In der DE 37 08 105 A1 ist ein Messtaster eines Koordinatenmessgerätes beschrieben, das für dreidimensionale Messungen vorgesehen ist. Für diese dreidimensionalen Positionsmessungen werden magnetoresistive Sensoren vorgeschlagen. Der Taststift steht bei diesem bekannten Messtaster mit einem seiner Pole einem magnetfeldabhängigen Widerstand gegenüber, wobei die Auslenkung des Taststiftes eine Veränderung des Abstandes zwischen Magnetpol und Widerstand bewirkt. Auch hier wird ein Raster aus einer Vielzahl von derartigen magnetfeldempfindlichen Widerständen verwendet, um eine gewisse Ortsauflösung zu erreichen.

In der DE 26 20 099 C2 ist ein Tastkopf mit allseitig auslenkbarem Taster beschrieben. Auch hier geht es um Messungen mit einem Koordinatenmessgerät. Zur Messtechnischen Erfassung der Bewegung des Taststiftes wird bei diesem bekannten Tastkopf eine induktive Sensoranordnung verwendet, bei der in allen drei Achsen jeweils zwei induktive Sensoren vorgesehen sind, die auf gegenüberliegenden Seiten eines Endes des Taststiftes angeordnet sind. Die induktiven Sensoren sind zu einer Brückenschaltung verschaltet.

In der DE 37 20 524 A1 ist eine Messkluppe beschrieben. Bei der bekannten Messkluppe wird auf dem Stab eine leiterartige Anordnung verwendet, während der auf dem Stab gleitende Läufer mit einem Hallsensor versehen ist. Der Hallsensor befindet sich neben einem Magneten, und zwar in dessen Symmetrieebene zwischen Nordpol und Südpol, so dass das Hallelement in Abwesenheit einer ferromagnetischen Störung symmetrisch von den Feldlinien des Magneten durchsetzt wird, so dass die Hallspannung gerade Null ist. Wenn nun der Läufer mit dem Hallsensor auf dem Stab verschoben wird, laufen die ferromagnetischen Sprossen der leiterartigen Anordnung an dem Hallsensor vorbei und verzerren das Magnetfeld, mit der Folge, dass das Hallelement unsymmetrisch von Feldlinien durchsetzt wird und dadurch eine endliche Hallspannung anliegt. Dies macht sich im Verlauf der Hallspannung dadurch bemerkbar, dass diese beim Vorbeilaufen einer ferromagnetischen Sprosse von Null zunächst auf einen Minimalwert absinkt, dann nach einem Nulldurchgang auf einen Maximalwert ansteigt und dann wieder auf Null absinkt. Dieser Signalverlauf wird einer Schwellwertstufe zugeführt, die aus den erwähnten Signalverläufen Impulse bildet, die anschließend gezählt werden, um auf diese Weise die Position des Läufers auf dem Stab zu bestimmen.

Aus der DE 197 12 829 A1 ist eine Vorrichtung zur Erkennung der Position eines beweglichen Gegenstandes, nämlich eines Kolbens in einem Pneumatikzylinder, bekannt. Auch hier wird der vorstehend erwähnte Verlauf der Hallspannung mit einem Nulldurchgang ausgenutzt, und zwar indem ein Hallsensor seitlich an einem Magneten vorbeigeführt wird. Auch in diesem Falle wird das Hallsignal mittels Schwellwertstufen weiterverarbeitet.

Schließlich offenbart die DE 196 39 801 A1 eine weitere Sensoranordnung zur Positionserfassung von bewegbaren Teilen mit einem Hallsensor, bei dem gleichfalls der Hallsensor seitlich an einem Magneten vorbeigeführt wird, um über den bereits erwähnten Verlauf der Hallspannung über eine Schwellwertstufe eine Scheibenwischanlage für ein Kraftfahrzeug zu steuern.

Die bekannten Anordnungen, soweit sie Koordinatenmessgeräte betreffen (DE 37 21 682 A1 und DE 198 23 059 C2) schlagen daher Hallsensoren in pauschaler Form vor, ohne dass auf die Besonderheiten hinsichtlich der Einbausituation und der Signalauswertung Näheres ausgesagt ist.

Soweit Hallsensoren zur Positionsbestimmung bei anderen Anwendungen eingesetzt werden und dabei ein Hallspannungsverlauf mit Nulldurchgang erzeugt wird (DE 37 20 524 A1, DE 197 12 829 A1, DE 196 39 801 A1 und DE 198 58 214 C2), betrifft dies völlig andere Anwendungsgebiete, und die genannten Anwendungen beschränken sich darauf, das modulierte Hallsignal mittels Schwellwertstufen in Impulse oder Rechtecksignale umzuformen, um damit entweder die Anzahl vorbeilaufender Objekte zu zählen oder bestimmte Endlagen zu bestimmen.

Bekannt ist weiterhin aus DE 196 39 801 A1 eine Sensoranordnung mit einem Magneten und einem Hallelement, die insbesondere dazu dient, die Parkposition eines Scheibenwischers zu detektieren. Der Magnet wird parallel zu seiner Nord-Süd-Achse an dem Hallelement vorbeigeführt. Durch einen Vorzeichenwechsel in der Messspannung entsteht eine steile Flanke, so dass die Position des Magneten relativ zum Hallelement genau erfassbar ist.

Die eingangs genannte GB 2 238 616 A offenbart einen Tastkopf für ein Koordinatenmessgerät, bei dem ein Magnet am oberen Ende des Taststiftes angeordnet ist. Gegenüber von dem Magneten ist ein integrierter Schaltkreis mit einem Hallelement angeordnet, um Auslenkungen des Taststiftes in den drei Raumrichtungen zu detektieren.

DE 37 15 698 A1 offenbart einen weiteren Tastkopf für ein Koordinatenmessgerät. In diesem Fall sind drei Feldplatten um den Taststift angeordnet. Jeder Feldplatte steht ein mit dem Taststift verbundener Gegenpol gegenüber. In Abhängigkeit von der Auslenkung des Taststiftes ändert sich der Widerstand der Feldplatten.

Der Erfindung liegt demgegenüber die Aufgabe zugrunde, einen Tastkopf für ein Koordinatenmessgerät der eingangs genannten Art dahingehend weiterzubilden, dass die vorstehend genannten Nachteile vermieden werden. Insbesondere soll eine hochauflösende Messung in drei Koordinatenrichtungen mit geringem apparativem und wirtschaftlichem Aufwand möglich werden, die mit bisherigen Messanordnungen in Koordinatenmessgeräten nicht erreichbar waren.

Bei einem Tastkopf der eingangs genannten Art wird diese Aufgabe erfindungsgemäß dadurch gelöst, dass der Magnet beim Auslenken des Taststiftes in Richtung seiner durch den Nordpol und den Südpol des Magneten definierten Achse seitlich an dem Hallelement vorbeigeführt wird, derart, dass an dem Hallelement eine Hallspannung mit wechselndenn Vorzeichen abnehmbar ist, und dass ein um den Vorzeichenwechsel herum liegender Bereich der Hallspannung als Maß für die Auslenkung des Taststiftes verarbeitet wird, wobei in dem Gehäuse eine Ebene definiert ist, die in der Ruhestellung des Taststiftes eine Radialebene des Taststiftes bildet, wobei der Taststift in der Ebene mittels einer Membran kardanisch aufgehängt ist, und wobei der Magnet und das Hallelement durch eine Aussparung in der Membran hindurchgreifen.

Die der Erfindung zugrunde liegende Aufgabe wird auf diese Weise vollkommen gelöst.

Durch die erfindungsgemäßen Maßnahmen wird nämlich erstmalig für den Anwendungsbereich bei einem Koordinatenmessgerät vorgeschlagen, durch eine aus anderen Anwendungsbereichen an sich bekannte Anordnung eines Hallsensors die Auslenkbewegung des Taststiftes in beliebigen Koordinatenrichtungen mit hoher Auflösung und linearem Signalverlauf zu erfassen. Dabei ist prinzipiell pro Koordinatenrichtung nur ein einziger Hallsensor erforderlich, auch wenn aus anderen Gründen für gewisse Anwendungsfälle zwei oder vier Hallsensoren zweckmäßig sein können, wie noch erläutert werden wird.

Gegenüber bekannten Tastköpfen für Koordinatenmessgeräte wird daher eine deutliche Verminderung der aktiven Messelemente erreicht, die nicht mehr rasterweise, also in großer Anzahl, eingesetzt werden müssen. Verglichen mit der Verwendung von Hallsensoren in anderen Anwendungsbereichen ergibt sich der Vorteil, dass der an sich bekannte Verlauf der Hallspannung in Abhängigkeit vom Weg nicht nur im Sinne einer Schwellwerterfassung ausgewertet wird. Vielmehr macht sich die vorliegende Erfindung die bislang noch nicht gewürdigte Tatsache zunutze, dass der Verlauf der Hallspannung in Abhängigkeit vom Weg im Bereich des Nulldurchganges über einen relativ großen Bereich hinweg linear ist, so dass hier eine kontinuierliche Messwerterfassung und -verarbeitung möglich ist.

Der Taststift ist in der Ebene mittels einer Membran kardanisch aufgehängt, und der Magnet und das Hallelement greifen durch eine Aussparung in der Membran hindurch. Diese Maßnahme hat den Vorteil, dass die Messung der X-Y-Auslenkung in der Kardanebene möglich ist, ohne dass die hierzu erforderlichen Elemente einander im Weg stehen.

Bei Ausführungsformen der Erfindung ist der Bereich vorzugsweise im Wesentlichen linear.

Diese Maßnahme hat den Vorteil, dass eine einfachere Messwertverarbeitung möglich wird, wenn z.B. eine von Hause aus nicht lineare Kennlinie eines Hallelements linearisiert wird, z.B. mittels vorab ermittelter Korrekturwerte.

Vorzugsweise ist der Taststift um einen in der Ebene liegenden Drehpunkt verschwenkbar und zum Erfassen der Verschwenkung mit mindestens einem ersten Magneten sowie das Gehäuse mit mindestens einem ersten Hallelement versehen, oder umgekehrt.

Besonders bevorzugt ist in diesem Zusammenhang, wenn mindestens ein erster Magnet mit seiner Achse parallel zur Achse des Taststiftes angeordnet ist und sich in der Ruhestellung des Taststiftes mit seiner zwischen seinen Polen liegenden Symmetrieebene in der Ebene befindet.

Diese Maßnahme hat den Vorteil, dass für Messungen in der sogenannten X-Y-Ebene genaue Messungen möglich sind, die nicht von der Verschwenkung des Taststiftes in dieser Ebene abhängen.

Es ist besonders bevorzugt, wenn der Magnet an einem sich radial vom Taststift fort erstreckenden Halter und das Hallelement an einer axial verlaufenden Innenwand des Gehäuses angeordnet sind.

Diese Maßnahme hat den Vorteil, dass die Verschwenkung des Taststiftes über die Länge des Halters verstärkt wird, wobei die Anordnung des Hallelementes an der Innenwand des Gehäuses einer maximalen Länge des Halters entspricht.

Bei weiteren Ausführungsformen der Erfindung ist in dem Gehäuse eine Längsachse definiert, die in der Ruhestellung des Taststiftes mit einer Längsachse des Taststiftes zusammenfällt, wobei der Taststift entlang seiner Längsachse elastisch verschiebbar ist und der Taststift zum Erfassen der Verschiebung mit mindestens einem zweiten Magneten und das Gehäuse mit mindestens einem zweiten Hallelement versehen ist, oder umgekehrt.

Diese Ausführungsform bezieht sich auf Messungen entlang der sogenannten Z-Achse, die ebenfalls in vorteilhafter Weise im Rahmen der vorliegenden Erfindung durchgeführt werden können.

Dies gilt insbesondere dann, wenn der Taststift um einen in der Ebene liegenden Drehpunkt verschwenkbar ist, wobei der zweite Magnet mit seiner Achse parallel zur Achse des Taststiftes angeordnet ist und sich in der Ruhestellung des Taststiftes mit seiner zwischen seinen Polen liegenden Symmetrieebene in der Ebene befindet.

Auch diese Maßnahme hat den Vorteil, dass besonders präzise Messungen durchgeführt werden können, wenn auch die Sensoranordnung für die Z-Achse sich in der Kardanebene des Taststiftes befindet.

Bei den vorgenannten Ausführungsbeispielen für Anordnungen zur Messung der Verschiebung in der Z-Achse ist ferner besonders bevorzugt, wenn der zweite Magnet am Taststift und das zweite Hallelement an einem sich radial von einer Innenwand des Gehäuses fort erstreckenden Halter angeordnet sind.

Diese Anordnung, die somit gerade entgegengesetzt zu der Anordnung der Sensorelemente für Messungen in der X-Y-Ebene ausgebildet ist, hat damit ebenfalls den Vorteil, besonders präzise Messungen durchführen zu können, die in der Z-Achse unabhängig von einer gleichzeitigen Auslenkung in der X-Y-Ebene sind.

Bei allen vorstehend genannten Ausführungsformen ist besonders bevorzugt, wenn mehrere Hallsensoren über einen Umfang des Tastkopfes verteilt angeordnet sind, insbesondere vier erste Hallsensoren oder zwei zweite Hallsensoren.

Diese Maßnahme hat den Vorteil, dass Differenzmessungen möglich sind, so dass z.B. beim Messen der Verschwenkung in der X-Y-Ebene nur eine gegensinnige Signaländerung an einander gegenüberstehenden Sensoren erfasst wird, während eine gleichsinnige Änderung herausgerechnet wird, weil diese auf einer Bewegung des Taststiftes in der Z-Achse beruht, die nicht von den ersten sondern von den zweiten Hallsensoren erfasst wird.

Schließlich ist im Rahmen der vorliegenden Erfindung besonders bevorzugt, wenn mindestens zum Erfassen einer Verschwenkung dienende Magnete bzw. Hallelemente mit einer kugelförmigen Oberfläche versehen sind, wobei der Radius der Oberfläche dem Radius der Verschwenkbewegung entspricht.

Diese Maßnahme hat den Vorteil, dass beim Verschwenken der Elemente des Hallsensors zueinander der Luftspalt zwischen den Elementen konstant bleibt.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Fig. 1: eine äußerst schematisierte Seitenansicht, im Schnitt, eines ersten Ausführungsbeispiels eines erfindungsgemäßen Tastkopfes entlang der Linie I-I in Fig. 2;
- Fig. 2: in vergrößertem Maßstab eine Draufsicht auf das Innere des Tastkopfes gemäß Fig. 1 in der Ansicht II-II von Fig. 1;
- Fig. 3A und 3B: eine abgebrochene Schnittansicht entlang der Linie III-III von Fig. 2, in zwei unterschiedlichen Betriebsstellungen;
- Fig. 4a und 4B: Darstellungen ähnlich den Fig. 3A und 3B, jedoch in einer Ansicht entlang der Linie IV-IV von Fig. 3;
- Fig. 5: eine schematisierte Seitenansicht eines Hallsensors, wie er im Rahmen der vorliegenden Erfindung eingesetzt wird;
- Fig. 6: ein Diagramm, darstellend die Hallspannung über dem Weg bei dem Sensor gemäß Fig. 5;

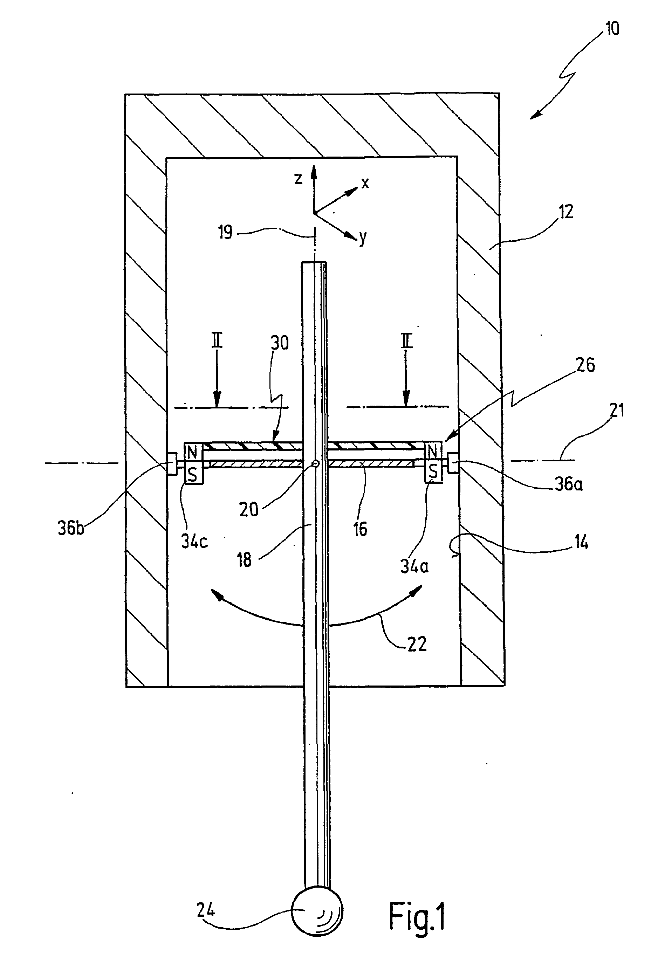

In den Fig. 1 bis 4 bezeichnet 10 insgesamt einen Tastkopf für dreidimensionale Messungen mittels eines Koordinatenmessgerätes. Der Tastkopf 10 weist ein Gehäuse 12 mit einer axial verlaufenden Innenwand 14 auf. An der axialen Innenwand 14 ist eine Membran 16 an deren Umfang eingespannt. Die Membran 16 trägt in ihrem Zentrum einen Taststift 18, dessen Achse 19 in der in Fig. 1 gezeichneten Ruhestellung des Taststiftes 18 mit der Längsachse des Gehäuses 12 zusammenfällt. Die Achse 19 liegt zugleich in der sogenannten Z-Achse des Tastkopfes 10, dessen Querachsen üblicherweise mit X und Y bezeichnet werden.

Der Taststift 18 ist damit kardanisch in einem Drehpunkt 20 im Zentrum der Membran 16 gelagert, wobei die Membran 16 in der Ruhestellung zugleich die sogenannte Kardanebene 21 bildet. Um den Drehpunkt 20 kann der Taststift 18 also in der X-Y-Ebene verschwenkt werden, wie mit einem Pfeil 22 angedeutet.

Der Taststift 18 läuft an seinem unteren Ende in eine Tastkugel 24 aus.

In Fig. 1 ist der Übersichtlichkeit halber nur das X-Y-Messsystem angedeutet, nicht jedoch das Z-Messsystem.

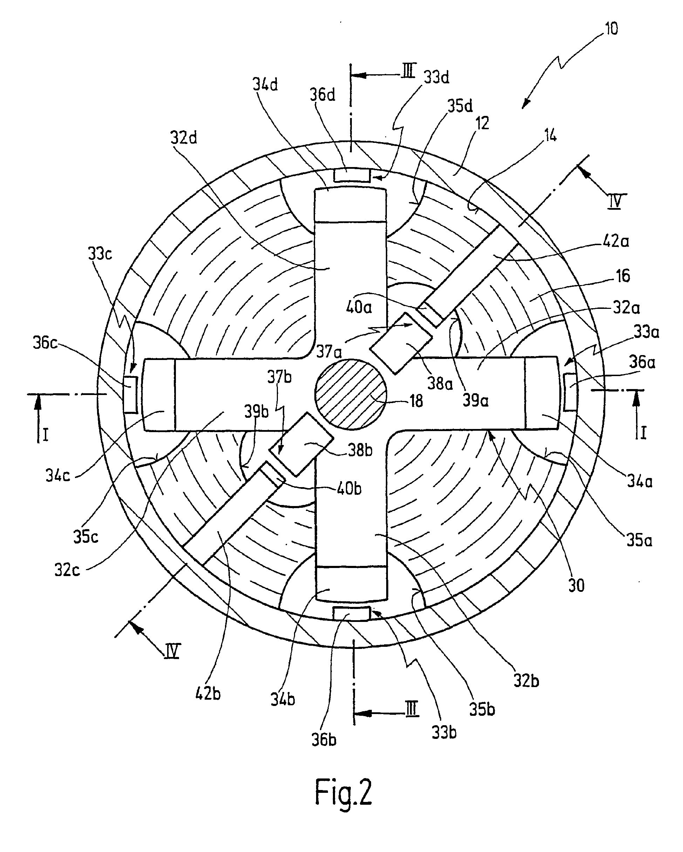

Weitere Einzelheiten des Tastkopfes 10 sollen nun anhand der Fig. 2 bis 4 erläutert werden:

Am Taststift 18 befindet sich etwas oberhalb der Kardanebene 21 ein sternförmiger Halter 30, der mit vier Armen 32a bis 32d radial vom Taststift 18 absteht und mit diesem starr verbunden ist.

An den freien Enden der Arme 32a bis 32d befinden sich erste Hallsensoren 33a bis 33d, die zum Erfassen der Verschwenkbewegung des Taststiftes 18 in der X-Y-Ebene, also um den Drehpunkt 20 herum, dienen.

Die ersten Hallsensoren 33a bis 33d weisen erste Permanentmagnete 34a bis 34d auf, die an den freien Enden der Arme 32a bis 32d angeordnet sind. Die ersten Permanentmagnete 34a bis 34d ragen durch erste Aussparungen 35a bis 35d am Umfang der Membran 16. Ihnen unmittelbar gegenüber befinden sich erste Hallelemente 36a bis 36d, die an der axialen Innenwand 14 des Gehäuses 12 angeordnet sind, derart, dass zwischen den ersten Permanentmagneten 34a bis 34d und den ersten Hallelementen 36a bis 36d nur sehr kleine Luftspalte verbleiben.

Zum Erfassen einer Verschiebung des Taststiftes 18 in der Z-Richtung sind zweite Hallsensoren 37a, 37b vorgesehen. Diese befinden sich unmittelbar am Taststift 18 in zwei diametral gegenüberliegenden Positionen. Zweite Permanentmagnete 38a, 38b werden vom Halter 30 getragen und ragen durch zweite Aussparungen 39a, 39b in der Membran 16. Die zugehörigen zweiten Hallelemente 40a, 40b befinden sich am freien Ende von Armen 42a, 42b, die radial von der axialen Innenwand 14 des Gehäuses 12 abstehen.

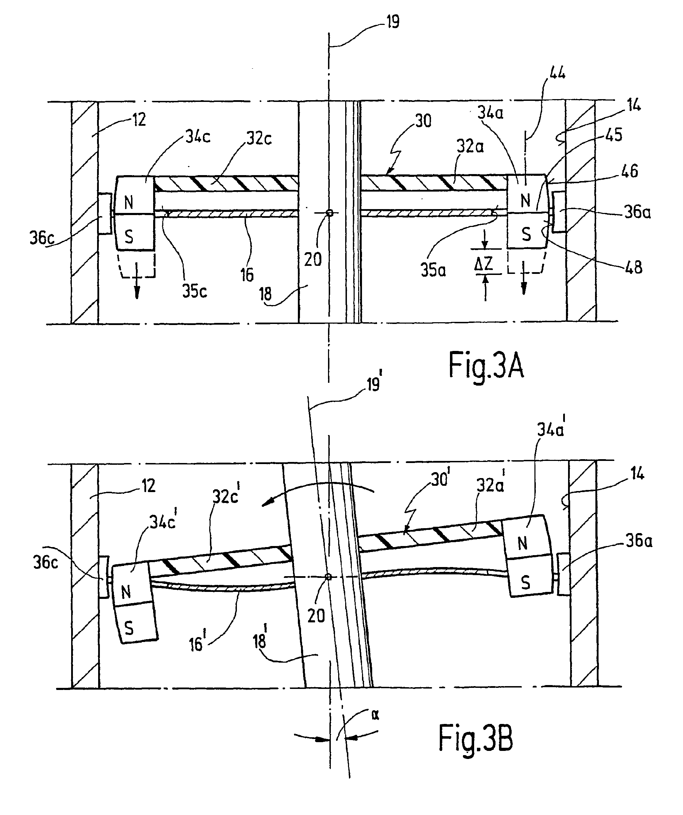

In Fig. 3A ist angedeutet, dass die ersten Permanentmagnete 34a bis 34d mit ihrer Achse 44, die durch die Pole N und S definiert ist, parallel zur Achse 19 des Taststiftes 18 ausgerichtet sind. Entsprechendes gilt auch für die zweiten Permanentmagnete 38a, 38b.

Ferner sind die ersten Permanentmagnete 34a bis 34d in Z-Richtung so positioniert, dass sich ihre Symmetrieebene 45 zwischen den Polen N und S in der Ruhestellung des Taststiftes 18 (Fig. 1 und Fig. 3A) gerade in der Kardanebene 21 befindet. Auch dies gilt für die zweiten Permanentmagnete 38a, 38b in gleicher Weise.

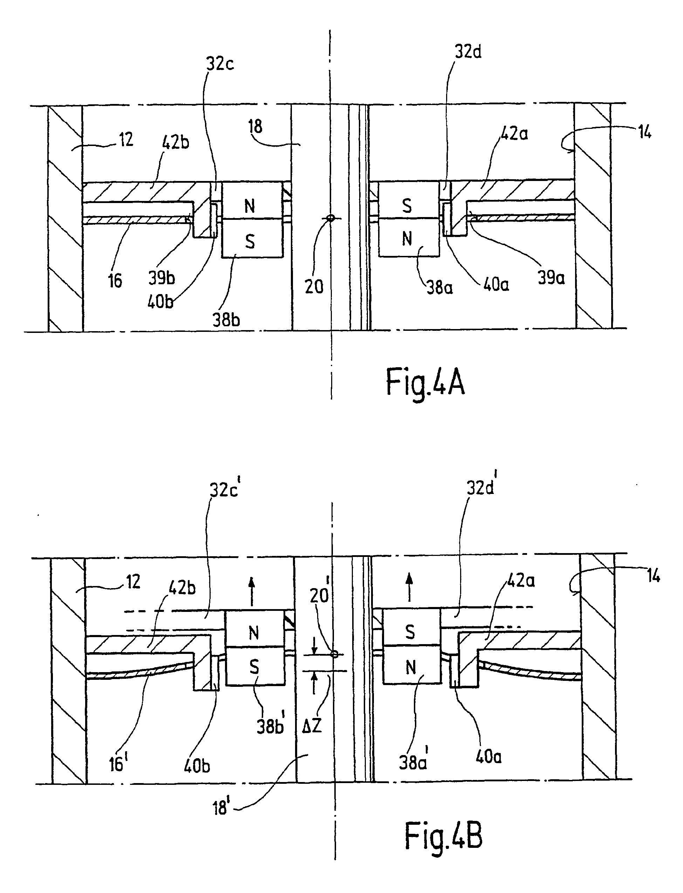

Die ersten Permanentmagnete 34a bis 34d sind in Richtung der Achse 19 sämtlich gleich gerichtet. Im dargestellten Ausführungsbeispiel liegen alle Nordpole N oben. Im Gegensatz dazu sind die zweiten Permanentmagnete 38a, 38b entgegengesetzt gerichtet, wie man deutlich aus Fig. 4A und 4B erkennt.

Schließlich ist in Fig. 3A noch angedeutet, dass die dem ersten Hallelement 36a zugewandte Oberfläche 46 des ersten Permanentmagneten 34a ebenso wie die gegenüberliegende Oberfläche 48 des ersten Hallelementes 36a kugelig ausgebildet sind, wobei der Kugelradius gerade dem Abstand der jeweiligen Oberfläche vom Drehpunkt 20 entspricht.

Die Arbeitsweise des Tastkopfes 10 gemäß den Fig. 1 bis 4 ist wie folgt:
Wenn sich der Taststift 18 in der Ruhestellung gemäß den Fig. 1, 3A und 4A befindet, so liegt sowohl an den ersten Hallsensoren 33a bis 33d, mit denen eine Verschwenkung in der X-Y-Ebene erkannt wird, wie auch an den zweiten Hallsensoren 37a, 37b, mit denen eine Verschiebung in Z-Richtung erfasst wird, ein Nullsignal an. Dies ist deswegen der Fall, weil die Feldlinien der Permanentmagnete 34a bis 34d bzw. 38a, 38b die ihnen zugeordneten Hallelemente 36a bis 36d bzw. 40a, 40b symmetrisch durchsetzen.

Fig. 3B zeigt nun die Situation, wenn der Taststift 18 aus seiner Ruhestellung 18 in eine verschwenkte Position 18' verschwenkt wird, wobei der Verschwenkwinkel in Fig. 3B mit α bezeichnet ist. In Fig. 3B sind alle verschwenkten Elemente in ihren Bezugszeichen durch Hinzufügen eines Apostroph gekennzeichnet.

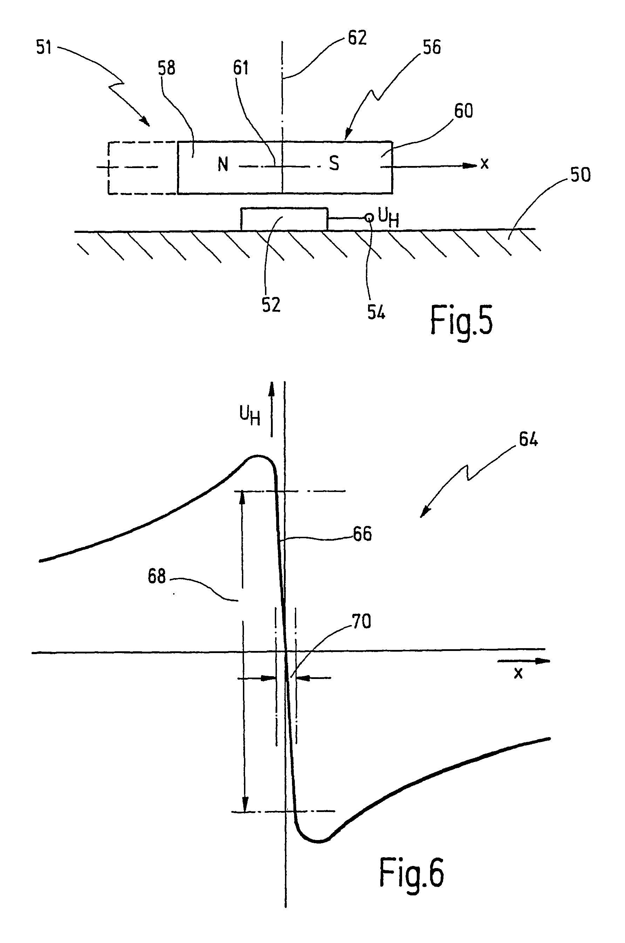

Wie leicht einzusehen ist, ändern sich die Signale, d.h. die Hallspannungen, an den Hallelementen 36a, 36c gegenläufig, wozu kurz auf die Darstellungen der Fig. 5 und 6 verwiesen werden darf:
In Fig. 5 bezeichnet 50 eine gehäusefeste Basis, auf der sich ein Hallsensor 51 befindet. Dessen Hallelement 52 ist fest mit der Basis 50 verbunden. An einem Anschluss 54 des Hallelementes 52 kann eine Hallspannung U_{H} abgenommen werden.

Der Permanentmagnet 56 des Hallsensors 51 wird in geringem Abstand über das Hallelement 52 hinweg bewegt. Dies geschieht in der Weise, dass die durch den Nordpol 58 und den Südpol 60 definierte Achse 61 des Permanentmagneten 56 mit der Bewegungsrichtung x zusammenfällt.

In der in Fig. 5 dargestellten Grundstellung liegt die Symmetrieebene 62 des Permanentmagneten 56 gerade mittig über dem Hallelement 52. Dieses wird folglich symmetrisch von den Feldlinien des Permanentmagneten 56 durchsetzt, so dass im Hallelement 52 zu beiden Seiten der Symmetrieebene 62 gerade symmetrische, jedoch gegenläufige Halleffekte auftreten, also die Ladungsträger in gleicher Weise, jedoch in entgegengesetzter Richtung abgelenkt werden.

Bewegt man nun den Permanentmagneten 56 in Richtung der Achse 61 von links nach rechts über das Hallelement 52 hinweg, so kann an dem Anschluss 54 eine Hallspannung U_{H} über dem Weg x abgenommen werden, wie in dem Diagramm 64 von Fig. 6 dargestellt.

Man erkennt, dass die Hallspannung U_{H} einen Nulldurchgang von Plus nach Minus durchläuft, wobei sich ein vorzugsweise linearer Bereich 66 im Bereich des Nulldurchganges einstellt, so dass innerhalb eines Spannungsbereiches 68 bzw. eines Wegbereiches 70 eine entsprechende Abhängigkeit der Hallspannung U_{H} vom Weg x angenommen werden kann. Wenn das Hallelement 52 von Hause aus eine nicht lineare Kennlinie aufweist, kann diese mit Hilfe von vorab ermittelten Korrekturwerten oder dergleichen linearisiert werden.

Betrachtet man nun erneut die Situation gemäß Fig. 3A und 3B, so wird leicht erkennbar, dass bei einer reinen Verschwenkbewegung um einen Winkel α gemäß Fig. 3B an den ersten Hallelementen 36a und 36c gerade entgegengesetzte Hallspannungen anliegen. Dies ist ein Indiz dafür, dass eine reine Verschwenkbewegung vorliegt.

Würde der Taststift 18 nur entlang seiner Achse 19 verschoben, wie mit ΔZ in Fig. 3A und strichpunktiert sowie mit Pfeilen angedeutet, so ergäben sich an den ersten Hallelementen 36a und 36c gleiche Signale, die mit üblichen Mitteln herausgerechnet werden können, um eine Verfälschung bei der Messung der Verschwenkung zu vermeiden.

Man erkennt aus den Fig. 3A und 3B ferner, dass die relativ langen Arme 32a bis 32d eine große Übersetzung der Verschwenkung des Taststiftes 18 am Messort der ersten Hallsensoren 33a bis 33d bewirken.

Die Fig. 4A und 4B zeigen die Situation im Zusammenhang mit der Messung der Verschiebung des Taststiftes 18 entlang der X-Achse, wobei Fig. 4A wieder die Ausgangssituation und Fig. 4B die Messsituation darstellt, in der der Taststift 18 aus der Ruhestellung 18 nach 18' verschoben wurde, wie mit ΔZ in Fig. 4B dargestellt.

Hier ergibt sich nun infolge der entgegengesetzten Ausrichtung der zweiten Permanentmagnete 38A, 38B im Ergebnis das Gleiche, was zuvor zu den Fig. 3A und 3B gesagt wurde. Bei der zu messenden Größe, nämlich bei einer linearen Verschiebung des Taststiftes 18 in Z-Richtung stehen an den zweiten Hallelementen 40a, 40b entgegengesetzte Spannungen an, während bei der nicht zu messenden Größe, nämlich bei einem Verschwenken des Taststiftes 18 gleiche Signale entstehen. Auch hier läßt sich also eine Signaltrennung nach gewünschten und unerwünschten Signalen durchführen.

Da bei der Messung der Verschiebung in Z-Richtung keine Übersetzung der Bewegung vorgenommen wird, findet die Messung in diesem Falle also in der Nähe des Taststiftes 18 statt, auch hier wiederum im Gegensatz zur Situation gemäß den Fig. 3A und 3B.

## Patentansprüche

1. Tastkopf für ein Koordinatenmessgerät mit einem in einem Gehäuse (12) federnd aufgehängten Taststift (18) und mit einer Sensoranordnung (26) zum Erfassen von Auslenkungen (α, ΔZ) des Taststiftes (18) relativ zum Gehäuse (12), wobei die Sensoranordnung (26) mindestens einen Hallsensor (33, 37, 51) mit einem Magneten (34, 38; 56) und einem in nahem Abstand dazu angeordneten Hallelement (36, 40; 52) aufweist, **dadurch gekennzeichnet, dass** der Magnet (34, 38; 56) beim Auslenken des Taststiftes (18; 88) in Richtung seiner durch den Nordpol (58) und den Südpol (60) des Magneten (34, 38; 56) definierten Achse (44; 61) seitlich an dem Hallelement (36, 40; 52) vorbeigeführt wird, derart, dass an dem Hallelement (36, 40; 52) eine Hallspannung (U_{H}) mit wechselndem Vorzeichen abnehmbar ist, und dass ein um den Vorzeichenwechsel herum liegender Bereich (66, 68, 70) der Hallspannung (U_{H}) als Maß für die Auslenkung des Taststiftes (18) verarbeitet wird, wobei in dem Gehäuse (12) eine Ebene (21) definiert ist, die in der Ruhestellung des Taststiftes (18) eine Radialebene des Taststiftes (18) bildet, wobei der Taststift (18) in der Ebene (21) mittels einer Membran (16) kardanisch aufgehängt ist, und wobei der Magnet (34; 38) und das Hallelement (36; 40) durch eine Aussparung (35, 39) in der Membran (16) hindurchgreifen.

2. Tastkopf nach Anspruch 1, **dadurch gekennzeichnet, dass** der Bereich (66, 68, 70) im Wesentlichen linear ist.

3. Tastkopf nach Anspruch 1 oder 2, **dadurch gekennzeichnet, dass** der Taststift (18) um einen in der Ebene (21) liegenden Drehpunkt (20) verschwenkbar (X, Y) ist, und dass der Taststift (18) zum Erfassen der Verschwenkung mit mindestens einem ersten Magneten (34) und das Gehäuse (12) mit mindestens einem ersten Hallelement (36) versehen ist, oder umgekehrt.

4. Tastkopf nach Anspruch 3, **dadurch gekennzeichnet, dass** der mindestens eine erste Magnet (34) mit seiner Achse (44) parallel zur Achse (19) des Taststiftes (18) angeordnet ist und sich in der Ruhestellung des Taststiftes (18) mit seiner zwischen seinen Polen liegenden Symmetrieebene (45) in der Ebene (21) befindet.

5. Tastkopf nach einem der Ansprüche 3 oder 4, **dadurch gekennzeichnet, dass** der erste Magnet (34) an einem sich radial vom Taststift (18) fort erstreckenden Halter (30) und das erste Hallelement (36) an einer axial verlaufenden Innenwand (14) des Gehäuses (12) angeordnet sind.

6. Tastkopf nach Anspruch 1, **dadurch gekennzeichnet, dass** in dem Gehäuse (12) eine Längsachse (Z) definiert ist, die in der Ruhestellung des Taststiftes (18) mit einer Längsachse (19) des Taststiftes (18) zusammenfällt, dass der Taststift (18; 88) entlang seiner Längsachse (19) elastisch verschiebbar ist, und dass der Taststift (18) zum Erfassen der Verschiebung mit dem mindestens einen Magneten (38) und das Gehäuse (12) mit dem mindestens einen Hallelement (40) versehen ist, oder umgekehrt.

7. Tastkopf nach Anspruch 6, **dadurch gekennzeichnet, dass** der Taststift (18) um einen in der Ebene (21) liegenden Drehpunkt (20) verschwenkbar (X, Y) ist, dass der Magnet (38) mit seiner Achse parallel zur Achse (19) des Taststiftes (18) angeordnet ist und sich in der Ruhestellung des Taststiftes (18) mit seiner zwischen seinen Polen liegenden Symmetrieebene in der Ebene (21) befindet.

8. Tastkopf nach einem der Ansprüche 6 oder 7, **dadurch gekennzeichnet, dass** der Magnet (38) am Taststift (18) und das Hallelement (40) an einem sich radial von einer Innenwand (14) des Gehäuses (12) fort erstreckenden Halter (42) angeordnet sind.

9. Tastkopf nach einem oder mehreren der Ansprüche 1 bis 8, **dadurch gekennzeichnet, dass** mehrere Hallsensoren (33, 37) über einen Umfang des Tastkopfes (10) verteilt angeordnet sind.

10. Tastkopf nach einem oder mehreren der Ansprüche 1 bis 9, **dadurch gekennzeichnet, dass** mindestens zum Erfassen einer Verschwenkung dienende Magnete (34) bzw. Hallelemente (36) mit einer kugelförmigen Oberfläche (46, 48) versehen sind, wobei der Radius der Oberfläche (46, 48) dem Radius der Verschwenkbewegung entspricht.

## Claims

1. A probe head for a coordinate measuring machine, comprising a stylus (18) resiliently suspended in a housing (12), and comprising a sensor arrangement (26) for detecting deflections (α, ΔZ) of the stylus (18) relative to the housing (12), the sensor arrangement (26) having at least one Hall sensor (33, 37, 51) with a magnet (34, 38, 56) and a Hall element (36, 40; 52) arranged in close proximity to the magnet, **characterized in that** the magnet (34, 38; 56), in a direction of its axis defined by the North Pole (N) and the South Pole (S) of the magnet (34), is laterally passed by the Hall element (36, 40; 52) such that a Hall voltage (U_{H}) of changing polarity can be tapped at the Hall element (36, 40; 52), and **in that** a range (66, 68, 70) of the Hall voltage (U_{H}) that lies around the polarity change is processed as a measure of the deflection of the stylus (18), wherein there is defined a plane (21) in the housing (12), which plane forms a radial plane of the stylus (18) in the rest position of the stylus (18), wherein the stylus (18) is cardanically suspended in the plane (21) by means of a diaphragm (16), and wherein the magnet (34) and the Hall element (36) project through a first cutout (35) in the diaphragm (16).

2. The probe head of claim 1, **characterized in that** the range (66, 68, 70) is substantially linear.

3. The probe head of claim 1 or 2, **characterized in that** the stylus (18) is adapted to swivel (X, Y) about a fulcrum (20) lying in the plane (21), and **in that** the stylus (18) is provided with at least one first magnet (34) and the housing (12) is provided with at least one first Hall element (36), or vice versa, in order to detect the swiveling.

4. The probe head of claim 3, **characterized in that** the at least one first magnet (34) is arranged with its axis (44) parallel to the axis (19) of the stylus (18) and, in the rest position of the stylus (18), it is located in the plane (21) with its symmetry plane (45) defined between its poles.

5. The probe head of one of claims 3 or 4, **characterized in that** the first magnet (34) is arranged on a holder (30) extending radially away from the stylus (18), and the first Hall element (36) is arranged on an axially extending inner wall (14) of the housing (12).

6. The probe head of claim 1, **characterized in that** there is defined in the housing (12) a longitudinal axis (Z) that coincides with a longitudinal axis (19) of the stylus (18) in the rest position of the stylus (18), **in that** the stylus (18) is elastically displaceable along its longitudinal axis (19), and **in that** the stylus (18) is provided with the at least one magnet (38), and the housing (12) is provided with the at least one Hall element (40), or vice versa, for detecting the displacement.

7. The probe head of claim 6, **characterized in that** the stylus (18) is adapted to swivel (X, Y) about a fulcrum (20) lying in the plane (21), and **in that** the magnet (38) is arranged with its axis parallel to the axis (19) of the stylus (18) and, in the rest position of the stylus (18), is located in the plane (21) with its plane of symmetry defined between its poles.

8. The probe head of one of claims 6 or 7, **characterized in that** the magnet (38) is arranged on the stylus (18), and the Hall element (40) is arranged on a holder (42) extending radially away from an inner wall (14) of the housing (12).

9. The probe head of one or more of claims 1 to 8, **characterized in that** a plurality of Hall sensors (33, 37) are arranged distributed over a circumference of the probe head (10).

10. The probe head of one or more of claims 1 to 9, **characterized in that** at least magnets (34) and/or Hall elements (36) serving for detecting swiveling are provided with a spherical surface (46, 48), the radius of the surface (46, 48) corresponding to the radius of the swiveling movement.

## Revendications

1. Tête de sonde pour un appareil de mesure de coordonnées avec une tige de sonde (18) suspendue de façon élastique dans un carter (12) et avec un agencement de capteur (26) servant à détecter des déviations (α, ΔZ) de la tige de sonde (18) par rapport au carter (12), l'agencement de capteur (26) comportant au moins un capteur à effet de Hall (33, 37, 51) doté d'un aimant (34, 38 ; 56) et d'un élément à effet de Hall (36, 40 ; 52) disposé à cette fin à faible distance, **caractérisée en ce que** l'aimant (34, 38 ; 56) est passé, en cas de déviation de la tige de sonde (18 ; 88), en direction de son axe (44 ; 61) défini par le pôle nord (58) et le pôle sud (60) de l'aimant (34, 38 ; 56), latéralement au niveau de l'élément à effet de Hall (36, 40 ; 52), de telle sorte qu'une tension de Hall (U_{H}) de signe changeant peut être détectée au niveau de l'élément à effet de Hall (36, 40 ; 52) et qu'une plage (66, 68, 70) de la tension de Hall (U_{H}) autour du signe changeant sert de mesure pour la déviation de la tige de sonde (18), un plan (21) étant défini dans le carter (12) constituant dans la position de repos de la tige de sonde (18) un plan radial de la tige de sonde (18), la tige de sonde (18) étant suspendue à la façon d'un cardan dans le plan (21) à l'aide d'une membrane (16) et l'aimant (34 ; 38) et l'élément à effet de Hall (36 ; 40) s'engrenant à travers un évidement (35, 39) prévu dans la membrane (16).

2. Tête de sonde selon la revendication 1, **caractérisée en ce que** la plage (66, 68, 70) est pour l'essentiel linéaire.

3. Tête de sonde selon la revendication 1 ou 2, **caractérisée en ce que** la tige de sonde (18) peut pivoter (X, Y) autour d'un point de rotation (20) situé dans le plan (21) et que la tige de sonde (18) est pourvue, pour détecter le pivotement, d'au moins un premier aimant (34) et que le carter (12) est pourvu d'au moins un premier élément à effet de Hall (36), ou inversement.

4. Tête de sonde selon la revendication 3, **caractérisée en ce que** l'au moins un premier aimant (34) est disposé de façon à ce que son axe (44) soit parallèle à l'axe (19) de la tige de sonde (18) et se trouve dans le plan (21) avec son plan de symétrie (45) situé entre ses pôles dans la position de repos de la tige de sonde (18).

5. Tête de sonde selon l'une quelconque des revendications 3 ou 4, **caractérisée en ce que** le premier aimant (34) est disposé au niveau d'un support (30) s'étendant dans le plan radial hors de la tige de sonde (18) et que le premier élément à effet de Hall (36) est disposé au niveau d'une paroi intérieure (14) du carter (12) s'étendant dans le plan axial.

6. Tête de sonde selon la revendication 1, **caractérisée en ce qu'**un axe longitudinal (Z) est défini dans le carter (12), ledit axe coïncidant avec un axe longitudinal (19) de la tige de sonde (18) dans la position de repos de la tige de sonde (18), que la tige de sonde (18 ; 88) peut être déplacée de façon élastique le long de son axe longitudinal (19) et que la tige de sonde (18) est pourvue de l'au moins un aimant (38) et que le carter (12) est pourvu de l'au moins un élément à effet de Hall (40), ou inversement, pour détecter le déplacement.

7. Tête de sonde selon la revendication 6, **caractérisée en ce que** la tige de sonde (18) peut pivoter (X, Y) autour d'un point de rotation (20) situé dans le plan (21), que l'aimant (38) est disposé de façon à ce que son axe soit parallèle à l'axe (19) de la tige de sonde (18) et se trouve dans le plan (21) avec son plan de symétrie situé entre ses pôles dans la position de repos de la tige de sonde (18).

8. Tête de sonde selon l'une quelconque des revendications 6 ou 7, **caractérisée en ce que** l'aimant (38) est disposé au niveau de la tige de sonde (18) et que l'élément à effet de Hall (40) est disposé au niveau d'un support (42) s'étendant dans le plan radial hors d'une paroi intérieure (14) du carter (12).

9. Tête de sonde selon l'une quelconque des revendications 1 à 8 ou plusieurs d'entre elles, **caractérisée en ce que** plusieurs capteurs à effet de Hall (33, 37) sont disposés de façon répartie sur une périphérie de la tête de sonde (10).

10. Tête de sonde selon l'une quelconque des revendications 1 à 9 ou plusieurs d'entre elles, **caractérisée en ce qu'**au moins des aimants (34) et/ou des éléments de Hall (36) servant à détecter un pivotement sont pourvus d'une surface (46, 48) sphérique, le rayon de la surface (46, 48) correspondant au rayon du mouvement de pivotement.
